# EUROPEAN PATENT SPECIFICATION

(11) **EP 2 240 279 B1**
(45) Date of publication and mention of the grant of the patent: **05.07.2017**
(21) Application number: 08864681.5
(22) Date of filing: 23.12.2008
(51) Int. Cl.: B01L 3/02

(54) **ACTUATING SYSYTEM WITH A PLURALITY OF BELLOW PIPETTES**
BETÄTIGUNGSSYSTEM FÜR PIPETTEN MIT BALG
SYSTEME DE COMMANDE POUR PIPETTES A SOUFFLET

(30) Priority: 24.12.2007 GB 0725237
(43) Date of publication of application: 20.10.2010
(73) Proprietor: DiaSorin Ireland Limited, Blackrock Dublin (IE)
(72) Inventor: HORNES, Erik, N-0283 Oslo (NO); HOLMBERG, Anders, S-13550 Tyreso (SE)
(74) Representative: Rambelli, Paolo
(86) International application number: PCT/GB2008/004254
(87) International publication number: WO 2009/081161

(56) References cited:
- EP-A- 0 520 797
- WO-A-2007/081000
- FR-A- 2 760 655
- GB-A- 987 542
- US-A- 3 444 742

## Description

The present invention relates to fluid handling devices for aspirating and dispensing fluids, known as pipettes. The present invention also relates to systems and methods for actuating such fluid handling devices or pipettes.

Pipettes are fluid handling devices which may be used in many applications to transfer quantities of fluid from one location to another. While pipettes may be used to aspirate and dispense gases, more commonly the fluid to be aspirated and dispensed is a liquid, and for ease of reference we will refer to aspiration and dispensing of liquids below. However, it will be appreciated that the invention is applicable to pipettes which may be used to handle any type of fluid, including gases, and where not explicitly stated, any references to handling liquid may equally apply to handling other fluids e.g. gases, unless the context demands otherwise.

In general a pipette may be actuated to aspirate a fluid e.g. liquid from one location e.g. container, and dispense it at a second location e.g. container. In some applications pipettes may be used actuated manually, while in others, an automated system may be used. Pipettes may be used individually, or may form part of a multi-pipette system. For example, in laboratory applications, arrays of automated pipettes may be used to simultaneously transfer quantities of e.g. liquid from one location to another, e.g. under the control of a robot. The present invention is applicable to both manually and automatically actuated pipettes, and to pipettes which are used individually or as part of a multiple pipette system.

Typically a pipette includes a lower dispensing portion having a dispensing tip through which fluid e.g. liquid may enter or leave the dispensing portion in use, and an upper portion which may be actuated to prompt aspiration and dispensing of fluid e.g. liquid into and from the dispensing portion in use. Depending upon the configuration e.g. volume of the dispensing portion, pipettes may be used to deliver a wide range of different volumes of fluid e.g. liquid as required in a range of different applications, such as clinical or laboratory applications, and may be used in conjunction with a range of different fluids e.g. liquids. Depending upon the application, pipettes may be formed from different materials, e.g. plastic or glass, and may be disposable or intended for multiple use. In some applications a filter may be located in the dispensing tip e.g. to prevent carry over of fluid from a previous run in clinical settings.

Pipettes aspirate and dispense fluids e.g. liquids as a result of an over or under pressure induced in or above the dispensing portion of the pipette. Creation of an underpressure will cause fluid to be drawn up into the dispensing tip of the pipette when submerged in the fluid e.g. liquid, while creation of an overpressure will cause fluid held in the pipette to be evacuated from the dispensing portion once more. Many techniques are used to create the over and underpressure in the pipette, and typically involve displacing fluid e.g. air in a region above the dispensing tip of the device. For example, in some conventional pipettes, a piston may be provided to pressurize or depressurize fluid located within a cylinder above the dispensing tip to create an over or under pressure in the region above the tip prompting movement of liquid in a manner similar to a syringe. Other pipettes include bellows formations which may be actuated to pressurize or depressurize a quantity of fluid located above the dispensing tip. The present invention is concerned with these "bellows" type pipettes.

In accordance with the invention there is provided
a pipette; the pipette comprising:
a bellows portion and a dispensing portion;
wherein the pipette is a multi-piece pipette having a bellows piece comprising said bellows portion and a separate dispensing piece comprising said dispensing portion.

In accordance with the invention, therefore, the bellows portion and the dispensing portion are provided by separate or discrete pieces of the pipette which are attached to one another, rather than being integral parts of a single piece. It will be appreciated that as used herein, the "pieces" of the pipette are separate, discrete pieces present in the manufactured pipette in its state intended for use. The pieces are separately formed and attached to one another. The present invention provide a pipette in which the bellows and dispensing pieces may be detached from one another by a user. The pieces are detached and reattached to one another to disassemble or assemble the pipette. In this way, the present invention may provide a pipette in which the bellows piece and dispensing piece are detachable and interchangeable in use i.e. by a user.

The present invention may therefore provide a more flexible pipette than a conventional device in which the bellows portion and dispensing portion are provided by different portions of the same piece. As the bellows portion and dispensing portion are provided by different pieces, the pipette may be more readily adapted for use in different applications by exchanging the dispensing piece or bellows piece. Effectively, bellows and dispensing pieces may be mixed and matched. For example, this may enable the dispensing volume to be altered, the pipette to be customised for use with different types of fluids, or, if a particular application demands the use of a dispensing portion having a filter, the dispensing piece may be exchanged for a suitable piece incorporating a filter. The use of the multi-piece construction also has particular advantages in facilitating automatic actuation of the pipette, as discussed in more detail below.

In accordance with the invention, the dispensing piece is the piece comprising the dispensing portion. The dispensing portion comprises the dispensing end through which fluid e.g. liquid is aspirated or dispensed in use, and may be referred to as the dispensing tip of the device. The dispensing portion or tip will typically be at least partially submerged in the e.g. liquid to allow aspiration of liquid when an underpressure is created above the tip in use. The dispensing portion is the portion of the pipette which is intended to contain the fluid e.g. liquid to be dispensed in use, although the level of the fluid e.g. liquid in the dispensing portion will depend upon the amount of fluid e.g. liquid held relative to the capacity of the dispensing portion.

The dispensing piece and bellows piece should preferably be arranged such that they may be readily attached and detached from one another by a user, e.g. to allow interchanging of a dispensing piece or bellows piece. Attachment between the pieces should be such that a suitable level of fluid tightness is maintained between the pieces for a particular application to allow the pipette to function. The bellows piece and dispensing piece are preferably directly attached to one another, and are preferably configured to cooperate with one another to facilitate such attachment. The pieces may be adapted in any suitable manner to provide such an attachment, and either or both pieces may comprise a connecting formation. Preferably the dispensing piece and/or bellows piece comprise a connecting portion to facilitate attachment of the dispensing piece and bellows piece. The connecting portions cooperate with one another to provide an attachment between the dispensing piece and bellows piece. The connecting portions may be comprise end portions of the respective pieces which engage one another during attachment of the pieces. The connecting portions may be arranged to mate with one another. In some embodiments the portions are arranged to resiliently fit together. In some embodiments, the connecting portions are arranged to receive one another to provide an attachment between the pieces. Preferably the dispensing piece then receives the bellows piece. In these embodiments, the connecting portions of the pieces overlap one another. However, it is envisaged that other forms of attachment may be used, and the connecting portions need not overlap one another. For example, some form of end to end attachment may be used which provides the necessary level of fluid tightness.

It will be appreciated that the provision of dedicated cooperating connecting portions on the respective bellows and dispensing pieces may be advantageous, in that these may be configured to conform to a standard fit, to allow interchangeability of the bellows and dispensing pieces. Greater freedom may then be provided in the construction of the portions of the dispensing and bellows pieces respectively below and above these connecting portions e.g. to provide different fluid/liquid capacities or a stronger or weaker bellows action. The present invention provides a plurality of pipettes of the multi-piece construction in accordance with the first aspect of the invention, in which the bellows pieces and dispensing pieces may be interchanged with one another. Thus a first pipette may comprise a first bellows piece and a first dispensing piece, and a second pipette may comprise a second bellows piece and a second dispensing piece. The first and second bellows pieces and/or the first and second dispensing pieces are configured such that they may be interchanged with one another e.g. to provide a pipette comprising the first bellows piece and the second dispensing piece, and/or a pipette comprising the second bellows piece and the first dispensing piece.

The dispensing portion comprises a fluid receiving passageway therethrough, and is typically in the form of an open ended liquid holding tube. The dispensing portion has a lower end through which fluid e.g. liquid is dispensed, the dispensing end, and an upper end which is connected to the bellows piece. The fluid receiving passageway extends right through the dispensing portion from one end to the other in order that it may cooperate with the interior of the bellows piece. The dispensing portion is hollow. In use, gas may move into and out of at least the upper portion of the fluid receiving passageway as a result of the over or underpressure created due to the action of the bellows portion, causing liquid, or whatever fluid is to be dispensed, to move into or out of the dispensing portion through the end of the dispensing portion.

The shape and dimensions of the dispensing piece and its fluid receiving passageway will depend upon the intended application of the device, e.g. the nature and quantity of liquid to be aspirated or delivered, and any structural requirements. Numerous dispensing piece e.g. tip constructions are known in the art. Preferably the dispensing piece is generally cylindrical, and, in preferred embodiments is tapered towards the tip. The dispensing piece may be tapered along the whole of its length or only a part thereof. The present invention is applicable to pipettes having dispensing pieces adapted to hold a wide range of volumes of liquid.

The bellows piece comprises a bellows portion for creating an over or under pressure which may act on fluid therebelow to cause fluid e.g. liquid to be aspirated or evacuated from the dispensing portion of the pipette in use. The action of bellows type pipettes is well understood. With reference to the case in which the fluid to be dispensed is a liquid, when the pipette is empty of liquid, the bellows portion may be contracted and then released again with the dispensing end of the dispensing piece submerged in liquid. In this way, release of the bellows portion creates an underpressure below the bellows portion, which may then prompt fluid from within the dispensing piece to move up and fill it, allowing liquid to enter the dispensing piece through the end of the dispensing piece as a result of the suction created. When it is desired to deliver liquid from the pipette, the bellows portion is contracted once more to create and overpressure forcing liquid out of the end of the dispensing piece. Operation is similar when a different type of fluid e.g. gas is to be dispensed.

The bellows portion may comprise any suitable type of bellows formation which may be actuated to cause fluid to move out of or into the bellows portion to or from the dispensing portion in use. In embodiments, the bellows portion is configured to be axially compressible or expandible between expanded and contracted states to cause fluid to move out of or into the bellows portion into the dispensing portion in use.

In embodiments, the bellows formation is provided by a plurality of axially spaced rings extending around the circumference of the piece which may be moved together or apart to contract or extend the bellows portion and cause fluid to move into or out of the bellows formation. The rings extend around the entire circumference of the bellows portion. Preferably the bellows formation is an axially extending concertina formation, and the bellows portion is preferably a portion of the bellows piece which has been formed into a concertina shape. The bellows formation may be formed in any suitable manner. Preferably the bellows formation is defined by a plurality of circumferentially extending folds provided in the sidewalls of the bellows piece. The folds will be axially spaced folds, and may be directed radially inwardly. Preferably the folds are regular folds. In these embodiments, the sidewalls of the bellows portion may define a zig zag profile in vertical cross section. The axial length and radial depth e.g. width of the folds may be selected as desired, depending upon the volume of the bellows portion required. The bellows portion may then define a lesser and greater diameter corresponding to the diameters defined at the radially innermost and outermost points of the folds.

In preferred embodiments, the bellows portion comprises a part of the axial length of the bellows piece which has been corrugated with circumferentially extending ring shaped corrugations. The walls of the bellows portion may be of variable thickness in the axial direction in the region of the bellows formation to facilitate folding thereof. Preferably the bellows formation is integrally formed in the bellows piece e.g. by a moulding process.

In embodiments, the bellows formation is thus exposed in use, and the bellows formations are defined in external surfaces of the bellows piece e.g. in the external axially extending sidewall or walls of the bellows piece. In preferred embodiments, the bellows piece is provided by a fluid holding tube which is closed at one end, whose sidewalls define the bellows formation. The open end of the tube may then cooperate with the open end of the dispensing piece of the pipette to provide a continuous fluid passageway.

It will be appreciated that these embodiments may provide a particularly simple arrangement, in which the bellows action may be provided by a single e.g. cylindrical piece which has been provided with suitable bellows formations, e.g. through appropriate corrugation, and without needing to provide any additional sleeve, insert, or other mechanism in the bellows portion. The bellows portion may simply be axially compressed or decompressed i.e. allowed to expand, to actuate the pipette. Preferably the bellow piece contains no internal components. It will be appreciated that in preferred embodiments of the invention, the entire interior volume of the bellows piece, including the region of the bellows portion may define a fluid holding chamber, maximising the bellows effect which may be obtained. Thus, the bellows piece defines a single fluid holding chamber which cooperates with the fluid holding chamber defined within the dispensing piece. In preferred embodiments, the fluid receiving chamber defined within the bellows portion extends the entire width of the bellows piece in the radial direction, and thus extends the entire width of the pipette in the region of the bellows piece.

The bellows portion, i.e. the part including the bellows formations, may extend the entire length of the bellows piece, or may only be located in a part thereof, preferably the upper part. Preferably the bellows portion extends to a top end of the bellows piece. Preferably the bellows portion terminates in the closed top end wall of the bellows piece. This may facilitate actuation of the bellows as described below. Preferably the bellows portion extends at least 35% of the axial length of the bellows piece. Preferably a lower part of the bellows piece is free from bellows formations. In preferred embodiments, the bellows portion extends no more than 50% of the length of the bellows piece. This may leave the lower parts of the bellows piece free for use in connecting to the dispensing piece and/or liquid holding as described below.

Preferably the bellows piece comprises a mounting portion for facilitating mounting of the bellows piece to an actuating system. Preferably the mounting portion is located below the bellows portion, and, where a connecting portion for facilitating attachment of the bellows piece to the dispensing piece is provided, between the bellows portion and the connecting portion. The mounting portion may simply be a region of the bellows piece which is free from bellows formations, and preferably which is untapered, to facilitate mounting to an actuating system. Preferably the mounting portion comprises a external formation, preferably a locating groove, which cooperates in use with a part of a pipette receiving means of the actuating system. The mounting portion may be a portion of the bellows piece which is engaged by the receiving part of the receiving means in use. For example, the receiving means of the actuating system may comprise a part arranged to clamp around the mounting portion of the bellows piece. In preferred embodiments, as described below, a receiving part of the actuating device is a clip, preferably a resilient clip, and the mounting portion is arranged to cooperate with a clip. These embodiments are particularly preferred as they may enable the pipette to be retained in place for actuation only in the region of the bellows piece, leaving the dispensing portion unattached to the actuating means, such that it may be more readily removed and replaced in use if required, without needing to demount the entire pipette.

It will be appreciated that the open end of the bellows piece cooperates with the upper end of the dispensing piece, i.e. that end furthest from the opening through which e.g. liquid moves into or out of the dispensing piece in use. In this way, fluid may move between the bellows piece and dispensing piece. The movement of gas in this way may help to transmit the over or under pressure formed due to actuation of the bellows portion to the dispensing portion. However, it will be appreciated that liquid may also move from the dispensing piece into the bellows piece.

In preferred embodiments, the bellows piece is deliberately configured such that when liquid is aspirated by the pipette through the dispensing means, liquid may, and preferably does, intentionally enter the bellows piece in use. In contrast to conventional devices which are configured to inhibit liquid from rising above a certain level in the pipette, the pipettes of the invention are therefore preferably configured such that liquid may intentionally enter the bellows piece when aspirated in use. In effect, the lower part of the bellows piece is intended to provide an extension to the liquid holding chamber defined by the dispensing piece. Thus, when a sufficient volume of liquid is aspirated by the pipette, liquid may fill not only the interior volume of the dispensing piece, but at least a part of the interior volume of the bellows piece. In this way, the range of volume of liquid which may be held by the pipette may be broadened, as both the bellows piece and dispensing piece are involved in the liquid holding process.

In order to allow the bellows piece to function in this manner, preferably the bellows portion of the bellows piece is provided in the upper region of the bellows piece and the bellows piece further comprises a lower portion free from bellows formations which may hold liquid in use. The lower part of the liquid holding portion may overlap an upper portion of the dispensing piece when the pipette is assembled, i.e. it may comprise the connecting portion of the bellows piece. However, preferably the liquid holding portion of the bellows piece comprises an upper part which is located between the bellows portion and a connecting portion of the bellows piece in use, e.g. which does not overlap the dispensing piece. The liquid holding portion may include at least a part of the mounting portion of the bellows piece where provided. Thus, the internal space defined in the region of the mounting portion may define at least in part, a portion of the bellows piece which is intended to hold liquid in use. The liquid holding portion may comprise a tapered part, and may comprise both tapered and an untapered part. Preferably the tapered part if provided is a lower part thereof.

Suitable relative volumes of the dispensing piece and bellows piece to enable the bellows piece to hold liquid may be determined empirically for different liquids to be held. Similarly, the way in which the bellows portion may be actuated e.g. the amount of compression required, to cause liquid to be drawn up into the bellows piece in use may be determined empirically. In some embodiments, the volume of the bellows piece is greater than the volume of the dispensing piece. Volume here refers to the interior volume.

It has been found that the following construction of the bellows piece may be advantageous, and may be particularly suitable in conjunction with embodiments in which the bellows piece is intended to hold liquid in use. The bellows piece is preferably generally cylindrical. The portions of the bellows piece below the bellows portion e.g. the mounting portion and connecting portion and any other portions, may be of lesser diameter than the bellows portion. This may be achieved through appropriate tapering and/or discrete steps in diameter. The bellows piece may include a tapered portion, preferably in the region below the bellows portion, and preferably below the mounting portion. The taper is towards the dispensing end of the pipette. In preferred embodiments, the mounting portion is untapered. The tapered portion may extend to the lower end of the bellows piece, or only to the connecting portion. In some embodiments, the bellows piece comprises a first tapered portion below the bellows portion, and a second tapered portion therebelow, the first tapered portion having a greater degree of taper than the second tapered portion. The first tapered portion is preferably located below the mounting portion. The second tapered portion may be located above the connecting portion, or may comprise the connecting portion.

It will be appreciated that the most appropriate shape/diameter of the various portions of the bellows piece will depend upon the intended use of the pipette, and the nature of the dispensing piece with which the bellows piece is to cooperate. Thus, in some embodiments, the bellows portion may be of greater diameter than others to provide greater levels of aspiration if the application demands. It is possible to vary the diameter of the bellows portion over a wide range without changing the height of the bellows portion, providing benefits in the ability to actuate a plurality of different volume pipettes simultaneously, as discussed below.

In embodiments in which the bellows piece is intended to hold liquid in use, preferably the bellows piece is arranged such that only the lower part of the bellows piece below the bellows portion i.e. the part having the bellows formation is involved in liquid holding. The bellows piece may be configured to inhibit liquid from entering the bellows portion at all. However, preferably the bellows portion is configured such that liquid may enter the bellows portion, but such that liquid which does enter the bellows portion in use is not retained in the bellows portion. Thus, liquid may only temporarily enter the bellows portion of the bellow piece, and the bellows portion is configured to cause any liquid which enters the bellows portion to tend to run back down into the part of the pipette below the bellows portion e.g. the dispensing piece and/or the lower part of the bellows piece below the bellows formations. In these embodiments, therefore, it is intended that liquid can, and does, initially enter the bellows portion. This may facilitate full use of the liquid holding capacity of the part of the bellows piece below the bellows portion in use.

The ability of liquid to only initially enter the bellows portion before running back into lower portions of the bellows piece in use may be provided by an appropriate configuration of the bellows formations, e.g. the depth of folds, angle of folds etc. Suitable configurations for given types and volumes of liquid may be determined empirically.

In preferred embodiments, the bellows portion is configured such that liquid which has entered the bellows portion will tend to be forced to leave the bellows portion on axial compression of the bellows portion. Thus, in these embodiments, any liquid which has not yet run down into lower portions of the bellows piece when actuation occurs will be forced to leave the bellows formations, and does not become trapped there. This may be achieved by appropriate configuration of circumferentially extending folds defining the bellows formation, and providing the folds with the ability to close under axial compression from progressively radially inwardly e.g. from their radially outermost edges.

In preferred embodiments in which the bellows portion defines a plurality of circumferentially extending folds in the axial direction, the folds are configured to close on axial compression of the bellows portion such that liquid may not enter and/or is forced out of at least a radially outer portion of the folds. Preferably the folds close progressively in the radially inward direction starting from the radially outermost edges. Thus, liquid may not move in outwardly in the radial direction into at least the radially outermost portions of the folds e.g. the radially outwardly directed sections of the folds, and any liquid therein is forced out of the folds into the central portion of the bellows piece such that it may fall back into the lower parts below the bellows portion. It has been found that a construction of the folds which results in the walls of axially adjacent radially outwardly directed folds contacting one another on compression of the bellows portions may be helpful in this regard. Thus, in embodiments, the bellows portion defines a plurality of V shaped radially outwardly directed folds in axial cross section, and the folds are configured such that the walls of the V shaped folds contact one another when the bellows portion is compressed axially. In this way, liquid is squeezed out of the folds and/or prevented from entering the folds on compression of the bellows portion.

In accordance with a further aspect of the present invention there is provided a pipette; the pipette comprising a bellows portion and a dispensing portion, wherein the pipette is configured such that it is intended that liquid can, and preferably does, enter the bellows portion in use. Preferably the bellows portion is arranged such that liquid tends to run back down into lower portions of the pipette and is not retained in the bellows portion, and/or such that any liquid which enters the bellows portion is forced out of the bellows portion when the bellows portion is subjected to axial compression as discussed above.

These further aspects of the invention may include any or all of the features described in respect of the first aspect of the invention. Of course, it will be appreciated that it is not necessary for the bellows piece to be configured such that it may participate in liquid holding in all embodiments, and it may be desired in some applications to provide a bellows portion which is configured to inhibit liquid from entering the bellows piece.

It will be appreciated that in use, the bellows portion will need to be actuated in order to cause aspiration and delivery of fluid e.g. liquid from the dispensing portion. The bellows portion is arranged such that it is compressed or allowed to expand axially to cause aspiration or delivery of e.g. liquid via the dispensing portion. The bellows portion may therefore be axially compressed from a natural unstressed state e.g. length to a contracted state e.g. length thereby causing fluid to be displaced from inside the bellows portion into the top of the dispensing portion to cause e.g. liquid held in the dispensing portion to be ejected through the dispensing tip. The bellows portion may then be allowed to axially expand e.g. extend once towards the unstressed state to draw in fluid from the dispensing portion, thereby sucking liquid through the dispensing tip into the dispensing portion during aspiration. This allowing of the bellows portion to expand may be referred to as decompression of the bellows piece. Compression may involve directly applying a force to the bellows portion, or indirectly, e.g. via an end of the bellow piece if the bellows portion does not extend to an end of the pipette. In embodiments, the axial compression and decompression results in collapsing and expanding of the bellows formations. Of course, the bellows portion need not fully return to its unstressed fully extended state on every actuation depending upon the volume of liquid to be aspirated or dispensed. All that is required is for there to be a relative compression or extension of the bellows portion between its initial and final states. The required amount of compression to cause aspiration or dispensing of a desired volume of a particular liquid may be determined empirically e.g. using calibration curves.

The bellows portion may be arranged such that compression (or expansion) may occur only by discrete amounts, e.g. corresponding to full compression or no compression, or more preferably may be compressible by a continuous range of amounts. In preferred embodiments, the bellows portion is arranged such that it will tend to expand towards its unstressed expanded state in the absence of an opposing contracting force. This may be achieved using suitable materials, and/or bellows configurations, e.g. concertina like folds which tend to open out in the absence of any counteracting force. The length of the bellows portion along the axis of the bellows piece is greater in the expanded state than its contracted state. Thus, during dispensing of e.g. liquid through the dispensing portion the length of the bellows portion decreases as the bellows piece is compressed, while during aspiration of liquid, its length increases. Preferably contraction or extension in the bellows piece results in a corresponding overall decrease or increase in the length of the pipette. This occurs as the bellows formations are preferably formed in an outer wall of the pipette.

It will be appreciated that the present invention may provide a particularly simple pipette, which may be actuated by depressing or decompressing e.g. releasing the closed axial end of the bellows piece, i.e. the end furthest from the dispensing end, and without the need for any additional actuating components, e.g. a pump, piston etc.

Actuation of the bellows portion to dispense or aspirate fluid e.g. liquid through the dispensing portion may be achieved manually or automatically. In manually operated embodiments, a user may directly manually exert a compressive force on the end of the bellows portion in the same manner as with a conventional single piece combined bellows/dispensing portion pipette using a finger or fingers. In other embodiments, the pipette may be mounted in an actuating system to automatically actuate the bellows portion. It has been found that the multi-piece pipette of the present invention is particularly advantageous when used in conjunction with an automated actuating system. The pipette is mounted to an automated actuating system, and the present invention extends to a pipette in accordance with any of the aspects or embodiments of the invention in combination with an automated actuating system. The actuating system comprises an actuator and means for receiving a plurality of pipettes, the actuator and receiving means being reciprocable relative to one another to compress or decompress the bellows portions of pipettes received in the receiving means in use.

It is believed that such an actuating system is advantageous in its own right, and from a further aspect of the invention there is provided, an actuating system for a plurality of pipettes of the type comprising a bellows portion; the actuating system comprising: means for receiving a plurality of pipettes; and an actuator; wherein the receiving means and the actuator are reciprocable relative to one another to compress or decompress the bellows portions of pipettes received in the receiving means in use.

The present invention in accordance with this further aspect may include any or all of the features of the other aspects of the invention to the extent that they are not mutually inconsistent therewith.

In this way, by appropriate reciprocation between the receiving means and actuator, the present invention may provide a particularly simple way of actuating a plurality of pipettes, i.e. a multi-pipette actuation system, by increasing or decreasing the separation between the receiving means and actuator, to compress the bellows portions of pipettes held in the receiving means or allow them to expand. Compression or decompression of the bellows portions may result in e.g. liquid being dispensed or aspirated through the dispensing portion or portions of the pipette or pipettes in use. It will be appreciated that compression of the bellows portion may be carried out to deliver e.g. liquid contained in the pipette, or to create an under pressure in readiness for aspiration of liquid when no liquid was previously located in the pipette, and expansion of the bellows piece may be used to aspirate liquid. An appropriate selection of relative movement between the actuator and receiving means may then be used to carry out a desired sequence of aspiration or delivery of fluid for transporting fluid between locations, or other operations as desired.

The invention extends to the actuating system in combination with at least one, and preferably a plurality of pipettes received by the receiving means. In these further aspects of the invention, the pipettes may be of any suitable form provided that they comprise a bellows portion. For example, the pipettes may comprise a single piece having a bellows portion and a dispensing portion. However, preferably the pipettes are multi-piece pipettes having separate dispensing and bellows pieces in accordance with any of the embodiments of the first aspect of the invention described above.

The multi-piece pipette construction of the present invention has been found to be particularly compatible with this form of actuation. It is believed that the pipette may be structurally stronger as a result of the use of the multipart construction, such that automated compression of the bellows portion may proceed with causing bending or flexing of the pipette in a manner which might interfere with its ability to be able to reliably enter a container to which liquid is to be delivered, or from which it is to be aspirated. The multi-piece construction may result in a more rigid pipette than a corresponding single piece pipette formed of the same material and thicknesses etc. As the pipettes may more reliably discharge their contents into the interior of a container, the need to provide some form of guide to try to ensure that the fluid enters the container is avoided. Such guides are undesirable, as they are associated with an unacceptable risk of contamination by contact with liquid present on the exterior of the dispensing portion of the pipette.

In these aspects and embodiments of the invention, the actuator and receiving means are reciprocable relative to one another to actuate the pipettes i.e. to result in compression of the bellows portions, or to allow them to expand. The reciprocation of the actuator and receiving means results in the application of an axial compression force on the pipettes to compress the bellows portions. The reciprocation may result in a space between the actuator and receiving means within which the bellows portions are located in use decreasing or increasing in height, i.e. an increase or decrease in the vertical separation of the actuator and receiving means.

The reciprocation may involve movement of the receiving means or the actuator, or both, provided that there is relative motion. Preferably the actuator is reciprocable relative to the receiving means. Preferably the receiving means is fixed during reciprocation and the actuator is movable i.e. reciprocable thereto. Reciprocation preferably occurs in a generally vertical plane.

In embodiments, the actuator is preferably movable between first and second positions, e.g. corresponding to raised and lowered positions. The actuator may extend in a generally horizontal plane, and move in a generally vertical plane during reciprocation. The actuator may therefore move from an upper position towards a lower position to compress the bellows portion or portions, or conversely from a lower position towards an upper position to allow the bellows portion or portions to expand or be decompressed. The actuator may be arranged to automatically return to the first position e.g. in which the bellows portion is expanded, when no opposing force is exerted. This may be achieved e.g. by appropriate biasing with a spring.

Reciprocation over the full available distance need not be carried out in every actuation. It will be appreciated that the actuating system may be controlled to cause relative reciprocation by a given amount between the actuator and receiving means in order to dispense or aspirate a desired quantity of fluid. The required amount of reciprocation to dispense or aspirate a given quantity of a particular fluid may be determined empirically, and calibration curves determined. The amounts of reciprocation required for dispensing or aspirating different quantities of fluid may be stored in conjunction with the relevant conditions e.g. type of fluid, volume of bellows and/or dispensing pieces etc. A control system associated with the actuating system may then look up the relevant reciprocation values for a particular set of input conditions. In this way, the system may then be controlled using stored data to provide a given amount of reciprocation for a particular set of conditions. In embodiments, the actuating system is arranged such that reciprocation may be carried out in discrete steps or quanta of the available distance. The system may then be programmed to carry out reciprocation over a given number of steps for particular operations, or look up the relevant number of steps using stored data.

The present invention extends to a method of operating an automated pipette actuating system in accordance with these further aspects of the invention, and, in accordance with a further aspect of the present invention there is provided;
a method of operating an automated pipette actuating system for actuating a plurality of pipettes, each comprising a bellows portion; the actuating system comprising: pipette receiving means for receiving a plurality of pipettes to be actuated; and an actuator; the actuator and pipette receiving means being reciprocable relative to one another to respectively compress the bellows portions or allow the bellows portions of the pipettes to extend; the method comprising reciprocating the actuator and receiving means relative to one another in a manner which results in compression or decompression of the bellows portions.

The present invention in accordance with this further aspect may include any or all of the features of the other aspects of the invention to the extent that they are not mutually inconsistent therewith.

The bellows portions may be compressed to thereby dispense liquid contained in the dispensing portions of the dispensing portions of the pipettes in use, or to create an underpressure in preparation for aspiration of liquid, and/or decompressed to allow the bellows portions to expand and thereby aspirate liquid into the dispensing portions of pipettes. In preferred embodiments, the method may comprise the step of determining the amount of relative reciprocation required to dispense or aspirate a given quantity of fluid, and controlling the actuating system such that the actuator and receiving means are reciprocated relative to one another by the determined amount. The amount may be determined by calculation, or e.g. retrieved, e.g. from a database or look up table.

Reciprocation between the actuator and the receiving means may be achieved in any suitable manner. The system may comprise reciprocating means for causing the reciprocation. For example, the actuator and/or receiving means may be connected to a motor for this purpose.

In accordance with any of the embodiments of the invention, the actuator may be of any suitable type. Preferably the actuator is an actuator member, and more preferably an actuating surface. For example, the actuator may be in the form of a bar, and actuation may be carried out by a lower surface of the bar. The surface may comprise e.g. projections or recesses for engaging different ones of the pipettes, or may be planar. In preferred embodiments the actuating surface is provided by an actuating plate. In these embodiments, the plate is preferably an reciprocating plate.

The actuator is preferably arranged to engage the upper end or ends of each pipette mounted to a pipette receiving means of the system, preferably the end of a bellows piece of pipettes in accordance with the invention. The actuator may engage the end of the bellows portions at all times, or only during a part of its travel during reciprocation.

It will be appreciated that the same actuator is arranged to actuate a plurality of pipettes. The pipettes may be arranged in a group such as a row or array of pipettes. The same actuator need not necessarily actuate every pipette held by the receiving means, although it preferably does. In embodiments, the actuator may result in actuation of the plurality of pipettes simultaneously. This may be achieved by mounting the pipettes such that the tops of the bellows portions are at the same level in order that they engage the actuator at the same time. This arrangement is particularly simple, avoiding the need to provide a pump, piston, or other more complex actuating system. In embodiments, the pipettes may be automatically actuated by bringing an actuator to bear against the top of the bellow pieces, axially compressing bellows formations integrally moulded in the upper portion or piece of the pipette, without requiring any additional components, or internal mechanism.

In accordance with the invention, the volume of the bellows portion may be varied over a wide range by varying the diameter of the bellows portion and without altering its height. This may allow pipettes with a wide variety of volumes to be produced. The volume of the bellows portion may affect the amount of contraction required to aspirate a given volume of fluid, or, in embodiments, the amount of liquid which may be held by the bellows portion contributing to the overall capacity of the pipette.

Preferably the receiving means is arranged to hold the pipettes in a fixed position at least in the direction of reciprocation, and preferably in all directions, as the actuator reciprocates. The receiving means is configured to retain the pipettes such that they are oriented with their longitudinal axes parallel to the direction of reciprocation i.e. perpendicular to the plane of the actuator in preferred embodiments. The axial ends of the pipettes may then be held such that they extend in a plane parallel to the plane of the actuating surface.

The receiving means of the actuating system may be arranged to retain the pipettes in a row, array or other pattern. Preferably the receiving means comprises a plurality of pipette receiving parts, each being arranged to cooperate with one or more pipettes to mount the pipettes to the actuating system. Preferably each receiving part is arranged to cooperate with a single pipette to mount the pipette to the actuating system. Preferably the receiving means comprises a plurality of pipette receiving parts which are located at the same vertical level. This may facilitate simultaneous actuation of multiple pipettes. Preferably the receiving means is configured to mount a plurality of pipettes such that they are radially spaced from one another.

In preferred embodiments, as discussed above, each pipette comprises a mounting portion which cooperates with a receiving part of the actuating device, and each receiving part of the receiving means therefore preferably cooperates with e.g. engages a mounting portion of a respective pipette. Preferably the receiving part engages a locating groove of the mounting portion. The mounting portion is, in embodiments, located below the bellows portions. In preferred embodiments, in which the pipette is of the multi-piece construction, the receiving part of the actuating means cooperates with the bellows piece of the pipette, and preferably with a mounting portion provided on the bellows piece of the pipette. Preferably the receiving means of the actuating system is arranged to engage only the bellows piece of the pipette and not the dispensing piece. In these embodiments, the dispensing piece is not directly mounted to the actuating means, and is unsupported other than by its attachment to the bellows piece. These embodiments are advantageous as they allow the dispensing pieces to be readily removed and attached to the bellows pieces without needing to remove the bellows piece from the actuating system. In this way, the dispensing piece associated with a particularly bellows piece may be removed therefrom and replaced, by a different dispensing piece, if desired, e.g. to allow dispensing of different volumes or types of liquid, or to provide a dispensing piece incorporating a filter, and without interrupting operation of a run of the actuating system.

For example, in this way, by engaging the receiving parts such that each is located at the same vertical spacing from the actuator at any relative position of the receiving means and actuator during reciprocation, the top of each bellows piece of the plurality of pipettes held in the receiving means will engage the actuator simultaneously when the bellows pieces are of the same height. This may be ensured by providing mounting portions on each of the plurality of pipettes in a fixed position relative to the bellows portions, i.e. a fixed distance along the axis of the bellows piece. Thus, each pipette may have bellows portions and mounting portions of standard heights. However, the multi piece construction of the pipettes may still provide flexibility despite the need to provide bellows portions of the same height in these embodiments, as the diameter of the bellows portion may be altered without interfering with attachment to the actuating system. The ability to mix and match different volume bellows and dispensing pieces may provide great flexibility in use.

In accordance with the invention in any of its aspects or embodiments, the receiving part should retain the pipette as required during actuation, but should permit the release of the pipette when required. The receiving part may be of any suitable construction, and may simply be a hole in a plate through which the pipette is inserted, with a size selected appropriately to retain the pipette. In these embodiments, the receiving means may comprise a plate having a plurality of holes therein for receiving and retaining each of a plurality of pipettes. However, preferably the receiving part is arranged to clamp around the pipette, and in particularly preferred embodiments is in the form of a clip. Preferably the receiving means comprises a plurality of clamping means, preferably clips, for receiving each of a plurality of pipettes. Preferably in any of its forms, the receiving part is a resilient part, e.g. arranged to receive the pipette by means of a resilient fit. For example, a clip may be arranged to snap fit around a pipette. This may allow the receiving part to more easily accommodate pipettes of different diameters in use, providing the ability to provide different volumes without changing the height of the bellows pieces.

In embodiments, the receiving means and e.g. receiving parts such as clips, are plastic, and are preferably integrally moulded. For example, they may be produced by injection moulding.

In accordance with a further aspect of the invention there is provided;
an actuating system for a plurality of pipettes of the type having a bellows portion, the system comprising: an actuator, and means for receiving the pipettes, wherein the receiving means comprises a plurality of receiving parts arranged to resiliently clamp around respective ones of the pipettes in use to mount the pipettes to the receiving means.

In accordance with the invention in any of its aspects or embodiments, the receiving means may be arranged to allow movement of the pipettes received therein in one or more directions e.g. perpendicular to the direction of relative reciprocation (preferably the direction of movement of the actuator). This may allow movement of the pipettes as required e.g. between sets of containers between which liquid is to be transferred, to release pipettes, or carry out other functions as required. The receiving means is preferably arranged to achieve such movement without substantial relative movement between the receiving means ad the pipettes mounted thereto (unless the pipettes are constrained from moving with the receiving means, e.g. by virtue of being retained in a container). In preferred embodiments, the receiving means comprises a plurality of receiving parts for receiving pipettes, each being mounted to a common mounting plate, the mounting plate being movable in at least one direction. In this way each pipette held in the receiving means may be moved simultaneously. In preferred embodiments, the receiving means is arranged to be movable in at least one direction perpendicular to the direction of reciprocation for moving pipettes mounted thereto in that direction or directions, e.g. a forward and backward direction and/or a side to side direction. If direction of reciprocation between the actuator and receiving means is taken to be the Y direction, the receiving means may then be movable in one or both of the X and Z directions. These directions will be in the radial direction relative to the pipettes. Preferably the receiving means is movable in a direction perpendicular to the plane in which the reciprocation occurs. This may allow the receiving means to receive or release pipettes, as described below.

Movement of the receiving means, actuator and other parts of the system may be achieved under the control or a robot, computer e.g. workstation or any suitable control means.

The receiving means may be arranged to release the bellows portions or pieces in any manner. In some preferred embodiments, the receiving means is arranged such that the pipettes may be released when the receiving means is moved appropriately relative to the pipettes. The receiving means may then be moved relative to the pipettes in a manner which results in disengagement of the pipettes from the receiving means. This may be e.g. a side to side or forwards and backwards direction of movement in the Z direction depending upon the configuration of the receiving means. In some embodiments, the receiving means is moved in a direction orthogonal to the plane in which the reciprocation occurs e.g. the plane in which the actuator moves during reciprocation i.e. radially with respect to the pipettes to release the pipettes. For example, in preferred embodiments in which the receiving parts of the actuating system are in the form of clips, or other open fronted formations, the pipettes may be released by moving the clips away from e.g. backwards relative to the pipettes. This will be in the radial direction of the pipettes. Preferably the receiving means is arranged to be movable in a direction orthogonal to the plane in which reciprocation occurs for releasing the pipettes. If the plate is taken to move in the Y direction, this may correspond to a forward and backward movement of the receiving means. The pipettes should be constrained from moving with the receiving means to allow them to become demounted from the receiving means as it moves i.e. to permit relative movement between the receiving means and pipettes. This may be achieved by locating the dispensing portions of the pipettes in suitable retaining means e.g. in containers. These containers may be containers corresponding to those located below the dispensing portions when they are located in a "trash" position. When the pipettes are released, they may then be deposited into these containers.

Mounting of the pipettes to the receiving means may be achieved by moving the receiving means relative to the pipettes to be received in a similar manner to release of the pipettes, but using a reverse direction of movement such that the receiving means moves towards the pipettes. Thus, movement of the receiving means in a forwards direction perpendicular to the plane in which reciprocation occurs may be used to mount pipettes while movement of the receiving means in a backwards direction may be used to release pipettes. Again, the pipettes may be held in an awaiting mounting position prior to being received by the receiving means. The method may comprise the step of mounting a plurality of pipettes to the pipette receiving means.

It will be appreciated that the present invention may allow the transport of liquid between containers located in first and second positions by appropriate movement of the pipettes between aspiration and delivery. This may be achieved by movement of the pipette receiving means in a direction orthogonal to the direction of the plane in which relative reciprocation between the actuator and receiving means occurs as described above. The containers may be sets of containers. For example, the containers may be liquid receiving chambers defined in trays. The chambers may be wells, etc., as known in the art.

The present invention extends the use of an actuating system in accordance with the above aspects and embodiments of the invention to actuate one, or a plurality of pipettes, preferably a plurality of pipettes simultaneously.

The present invention extends to an actuating system in accordance with any of the further aspects and embodiments of the invention in combination with one, or a plurality of pipettes. The pipettes are preferably in accordance with any of the embodiments of the first or second aspects of the invention.

The present invention extends to the actuating system in combination with a plurality of containers from which liquid from the pipettes is to be delivered, or from which liquid from is to be aspirated by the pipettes.

As described above, although the invention has been described with particular reference to aspirating or delivering liquids, it will be appreciated that the pipettes and actuating system of the various aspects and embodiments of the invention described are applicable to the aspiration and delivery of any fluids, e.g. gases, and are not limited to use in conjunction with liquids. Any references to dispensing or aspiration of liquids may therefore be replaced with the more general reference to fluids without departing from the invention, unless mutually inconsistent with the passages concerned.

In accordance with the invention in any of its aspects or embodiments, any suitable material known in the art may be used to provide the bellows and dispensing pieces of the pipette. The material should have the appropriate inherent properties and/or thickness to provide a pipette which may withstand the conditions expected to be encountered in use, e.g. depending upon the type of liquid to be transported, and the actuation method etc. Preferably the dispensing piece is formed from plastic. Preferably the bellows piece is formed from plastic. Preferably the bellows piece and/or dispensing piece is formed by an injection moulding process. In preferred embodiments, the dispensing piece is a disposable piece. In these embodiments, the dispensing piece is intended to be thrown away after a single use, without being washed and reused. Preferably the bellows piece is disposable. In particularly preferred embodiments, the invention may provide a plastic pipette i.e. without any non plastic parts. This may be particularly advantageous in providing a pipette which is intended to be disposable.

The present invention is applicable to pipettes having a wide range of volumes. By way of example only, the pipettes may have a volume in the range of from 0.1 ml to 15000 ml, or from 5 ml to 3000 ml. These ranges are not limiting, and the skilled person will understand how the basic construction may be applied over a very large dimensional range, over orders of magnitude.

It will be appreciated that when assembled, the bellows piece is located above the dispensing piece, and the bellows and dispensing pieces thus form the upper and lower pieces of the pipette.

Preferably the pipette is a two piece pipette. In these embodiments, the pipette consists of the bellows piece and dispensing piece.

The present invention extends to the use of a pipette or actuating system in accordance with the invention in any of its aspects or embodiments.

Where not explicitly stated, it will be appreciated that embodiments in accordance with any of the aspects of the invention may incorporate any or all of the features described with respect to other aspects of the invention unless inconsistent therewith.

Some preferred embodiments of the invention will now be described by way of example only and with reference to the accompanying drawings, in which:-
Figure 1 is a schematic perspective view showing an assembled two-piece pipette in accordance with one preferred embodiment of the invention;
Figure 2 is a schematic perspective view showing the dispensing piece of the pipette of Figure 1 in more detail;
Figure 3 is a perspective view showing the bellows piece of the pipette of Figure 1 in more detail;
Figures 4 and 5 are further perspective views of the bellows piece shown in Figure 3 illustrating certain features in more detail;
Figure 6 is a vertical cross-sectional view taken along the axis of the bellows piece shown in Figure 4, and showing certain dimensional features of one exemplary embodiment in more detail;
Figure 7 corresponds to the view of Figure 4, but showing certain dimensional features of one exemplary embodiment of the invention in more detail;
Figures 7A and B show the configuration of the folds of the embodiment of Figure 7 schematically before and after undergoing axial compression;
Figure 8 shows the pipette in accordance with the embodiment of Figures 1 to 7 mounted in an automated actuating system in accordance with a preferred embodiment of the invention;
Figures 9 is a perspective view schematically illustrating the way in which the pipette is mounted to the actuating system in more detail; and
Figure 10 is a side view schematically showing the way in which the receiving clip of the actuating system cooperates with the mounting portion of the bellows piece of the pipette in more detail.

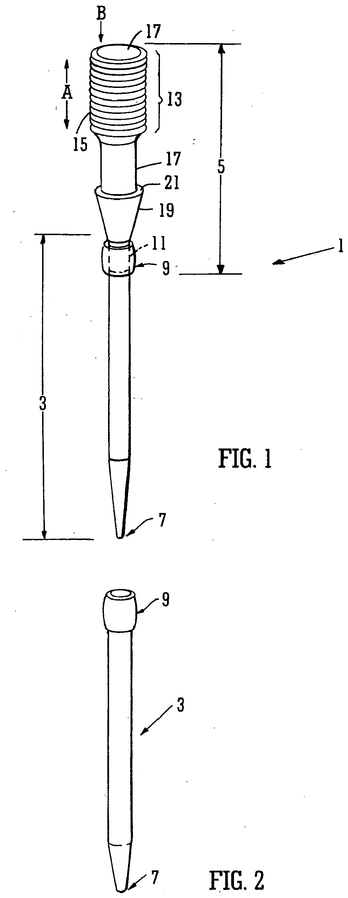

The construction of a pipette in accordance with one embodiment of the invention will now be described with reference to Figures 1-7B.

Figure 1 shows an assembled two-piece pipette 1 in accordance with a first embodiment of the invention. The pipette 1 includes a dispensing piece 3 and a separately formed and attached discrete bellows piece 5.

The dispensing piece 3 is in the form of a conventional dispensing tip, which is generally cylindrical and tapered towards it open dispensing end 7. The dispensing piece 3 is hollow and defines an interior fluid receiving chamber. The dispensing piece 3 includes a dispensing end 7 through which liquid enters or leaves the interior of the dispensing portion. The dispensing piece also includes a connecting portion 9 at the end furthest from the dispensing end 7. The connecting portion 9 receives a corresponding connecting portion 11 provided at the lower end of the bellows piece 5. The respective connecting portions 9, 11 are arranged to cooperate or mate with one another to securely attach the dispensing and bellows pieces together. The connecting portion 11 of the bellows piece is received by the connecting portion 9 of the dispensing piece 3. The lower end of the bellows piece 5 is indicated by the dotted lines within the overlapping part of the dispensing pieces connecting portion. The bellows piece 5 and dispensing piece 3 may be detached from one another and reattached as desired. The pipette defines a longitudinal axis in the direction of the arrow A. The pipette has length or height along this axis. The diameter or width of the pipette extends perpendicular thereto along a horizontal section. The bellows piece may be described as being the upper part of the pipette, and the dispensing piece the lower.

Both the bellows piece 5 and the dispensing piece 3 are formed of injection moulded plastic and are intended to be disposable.

The bellows piece 5 includes at its upper end, i.e. the end furthest from the dispensing piece 3, a bellows portion 13. The bellows portion 13 is that portion of the bellows piece 5 which has bellows formations 15 in the form of a plurality of circumferentially extending folds provided at intervals along the axis of the device, and providing the bellows piece 5 with a concertina shape in its upper region.

The corrugations of the concertina shape are defined in the exterior side walls of the bellows portion. The bellows portion also defines a closed end wall 17 against which an axial force may be applied in the direction B to compress the bellows portion. The concertina formation enables the bellows portion 13 to be compressed and decompressed i.e. allowed to extend once more in the direction of the arrow A in use when an axial compression force is applied thereto.

The bellows portion 13 i.e. the portion having the concertina-like bellows formation does not extend the entire length of the bellows piece 5. Between the bellows portion 13 and the connecting portion 11 of the bellows piece there are further portions 17 and 19 which are free from any bellows type formation. The portion 17 is in the form of an untapered smooth walled section terminating in locating groove 21, and defines a mounting portion which cooperates with a receiving part of an actuating system for mounting the pipette to the actuating system as described in more detail below. The portion 19 includes a tapered section 19a and a further section 19b adjacent the connecting portion 11 which is not tapered, or tapered to a lesser degree. The sections 19a and 19b do not overlap the connecting portion 9 of the dispensing piece when attached thereto.

In accordance with certain embodments of the invention, liquid may not only enter the dispensing piece 3, but is also intended to enter the lower part of the bellows piece in the region below the bellows portion 13 i.e. the portions 11, 17 and 19 in use. These parts of the bellows piece 5 located below the bellows portion 13 therefore define a liquid receiving chamber, into which liquid is intended to enter during use.

Figure 2 shows the dispensing piece 3 in more detail.

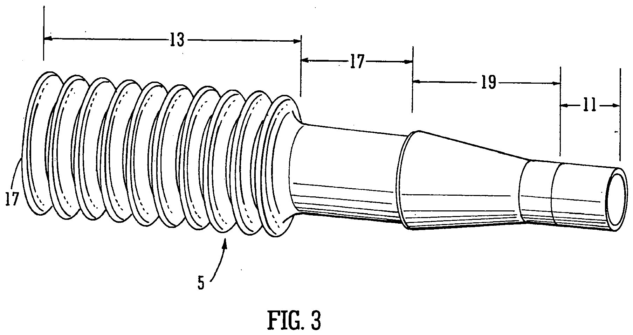

The bellows piece 5 is shown in more detail with respect to Figures 3 to 5. These figures show the mounting and connecting portions, and the portions therebetween which may receive liquid in use, in more detail.

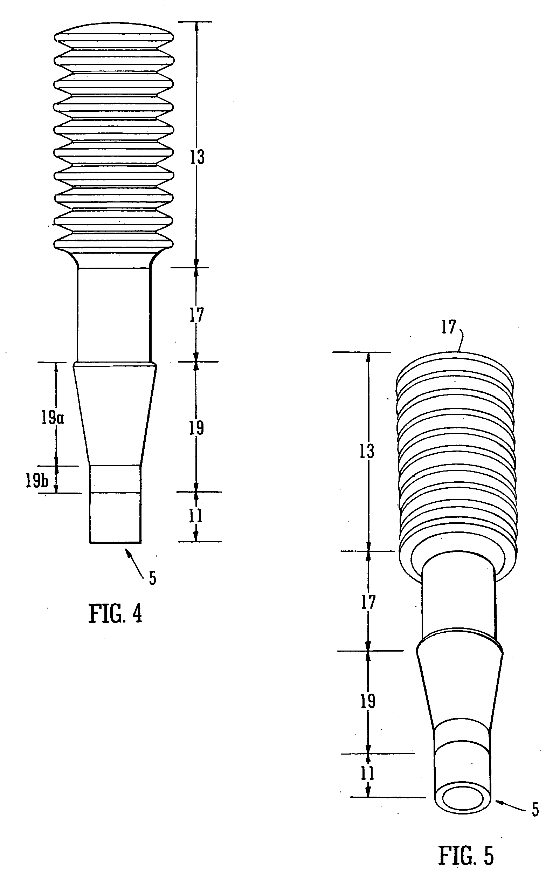

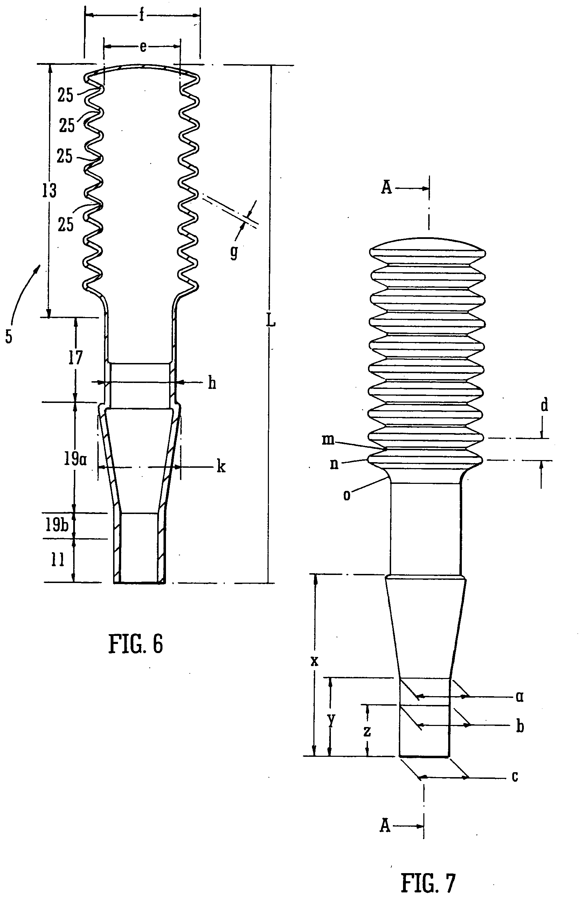

Figure 6 is a vertical cross-sectional view taken along the axis of the bellows piece shown in Figure 4, and showing the configuration of the bellows portion 13 in more detail. It will be seen that the concertina-like bellows section is defined by a plurality of inwardly directed radial folds 25 spaced at intervals along the axis of the bellows piece. The folds 25 define a zig-zag-profile in vertical cross-section.

In embodiments of the invention, the bellows piece 5 is designed such that when assembled to the dispensing piece in use as shown in Figure 1, liquid aspirated into the pipette is intended to not only enter the dispensing piece 3, but also at least the lower portion of the bellows piece below the bellows portion 13. In this way, the lower part of the bellows piece below the bellows portion i.e. the parts labelled 11, 19 and 17, provide an extension to the liquid receiving chamber defined by the dispensing piece, allowing a greater volume of liquid to be accommodated. Suitable configurations of the bellows piece and dispensing pieces to achieve this function may be determined empirically for given volumes or liquids. In embodiments, the volume of the bellows piece is greater than the volume of the dispensing piece. This may help to encourage liquid to enter the bellows piece in use.

While liquid enters the bellows piece, it is not desirable for it to remain in the bellows portion 13 i.e. that portion having the concertina-like formation 15, as this may interfere with operation of the bellows portion in use. Thus, the folds 25 defining the bellows portion are configured in such a manner that any liquid which does enter the bellows portion will not be retained there, but will tend to be urged out of the folds and fall back into the lower part of the bellows piece below the bellows portion 13. Again, suitable configurations to achieve this may be determined empirically, e.g. by appropriate selection of fold angles. In some preferred embodiments, the bellows portion is configured such that any liquid which is present in the bellows portion when compression occurs is forced out of the bellows portion into the interior of the bellows piece so that it may fall down into the region below the bellows portion.

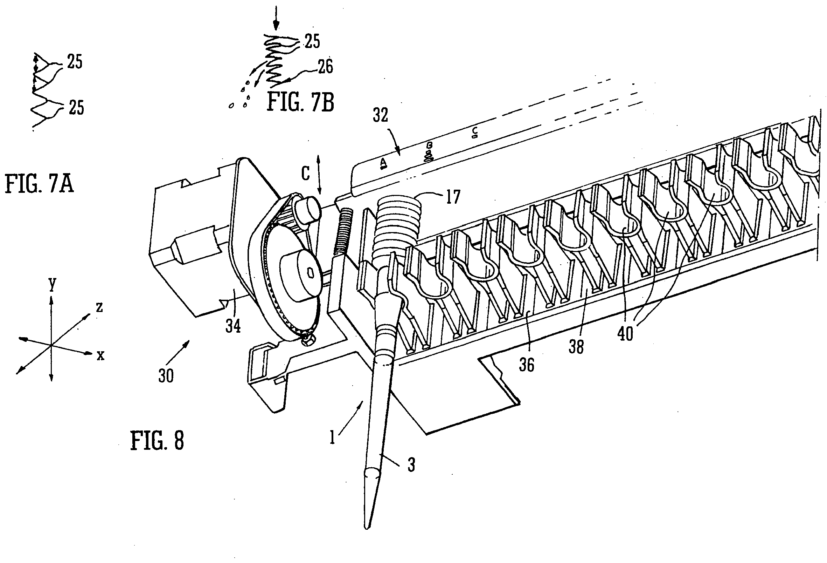

Some dimensions of one example of a bellows piece 5 which has been found to function in this way will be described with reference to Figures 6 and 7. It is believed that the relative volumes of the dispensing and bellows pieces and the angles of the folds may be important in providing the ability of the bellows piece to take up liquid, and preventing the liquid from remaining in the bellows portions. These dimensions are exemplary only, and it will be appreciated that other configurations may be selected to result in this function being achieved, for different liquids and volumes. The length dimensions labelled x, y and z respectively in Figure 7 are 27.7mm, 12.0mm and 7.8 mm. The diameters of the parts labelled a, b and c respectively are 7.9mm, 7.75 mm and 7.6 mm. Thus, the length of the portion 19 b is given by y-z, the length of the portion 11 by z and the length of the portion 19a by x-y.

Referring to Figure 6, the diameters of the portions 17 and 19a respectively (h and k) are 11.0 mm and 12.6 mm.

The distance between adjacent folds along the axis of the bellows portion d is 3.5 mm (Figure 7). There are ten such folds, and each distance between adjacent folds is identical. The diameter defined between the radially innermost parts of each of the folds 25, e marked on Figure 6 is 12.57 mm. The diameter f measured between the radially outermost portions of the folds 25 is 18 mm. These dimensions are the same for each of the folds. The thickness of the material in the region of the folds g (Figure 6) is 0.4 mm.
The overall length of the bellows piece L is 77.85 mm (Figure 6).

The lengths along the axis A-A defined by the folds 25 at their radially outermost and innermost parts are 0.2 mm (m) and 0.6 mm (n) respectively (Figure 7). At the base of the bellows piece, above the mounting portion, there is a region with a length of 2.5 mm (o).

Figures 7A and 7B illustrate in more detail the way in which the folds function in use to avoid liquid being trapped in the folds when axial compression takes place. When an axial force is applied in the direction of the arrow in Figure 7 C, the folds 25 are axially compressed, such that the radially outermost portions at the outer edges 26 contact one another. In this way, the folds close from the radially outermost point inwardly, forcing liquid trapped in the fold out of the fold as indicated, and inhibiting liquid from entering the fold.

In use, the bellows piece 30 may be compressed axially to force to reduce its length in the axial direction due to the collapsing of the bellows portion 13, thus displacing fluid in the form of air trapped within the bellows formation into the lower part of the bellows piece. In this way, liquid held in the pipette is forced out of the dispensing piece 3, and bellows piece 5 if any liquid is located therein. In other words, an overpressure is created. When the bellows piece portion 13 is allowed to return its extended configuration shown in Figure 4 from its compressed configuration, an underpressure in the region above the dispensing piece 3 is created, causing liquid to be aspirated into the dispensing piece 3, and bellows piece 5 if the volume of liquid is sufficient, when the dispensing tip is submerged in liquid.

The use of the pipette will be described with reference to Figures 1 to 7. The dispensing piece and bellows piece 3, 5 of the pipette are assembled together by inserting the connecting portion 11 of the bellows piece 3 into the connecting portion 9 of the dispensing piece 5, such that they are securely attached to one another. In order to aspirate liquid, axial pressure is exerted on the end 17 of the bellows portion 13 in the direction B, causing the concertina-like bellows portion 13 to be contracted in the direction of arrow A of Figure 1, reducing in length. The tip 7 of the dispensing piece 3 is submerged in liquid, and the force applied to the bellows piece 5 in the axial direction removed, allowing the bellows portion 13 to expand towards the configuration shown in Figure 1. As the bellows portion expands, an underpressure is created, and fluid is moved out of the portion of the bellows piece below the bellows portion and the top of the dispensing portion, creating a suction effect, drawing liquid up through the tip 7 into the dispensing piece 3. Depending upon the volume of liquid aspirated, liquid may also enter the region of the bellows piece below the bellows portion 13. Any liquid which temporarily enters the bellows portion 13 is caused to return to the lower portion of the bellows piece or the dispensing piece by the configuration of the folds of the bellows portion 13, and any left in the folds of the bellows formation is forced out when actuation is occurred.

In order to dispense the fluid, the bellows portion 13 is compressed in a direction of the arrows A again, creating an overpressure in the upper region of the pipette, forcing liquid to move out of the dispensing tip 7.

It will be appreciated that a pipette of the two-part construction shown in Figure 1 is advantageous in that the dispensing and bellows pieces may be interchanged, provided that they are configured so as to be able to connect to one another. Provided the connecting portions are compatible with one another, great flexibility is provided in the lengths and volumes of the bellows piece and dispensing piece, allowing mixing and matching of different pieces to provide a desired pipette for transporting a particular type of liquid, or liquid volume.

While actuation of the pipette i.e. compression of the bellows portion 13 may be achieved by manual pressure on the end 17 of the bellows portion 13, the pipette of the present invention is particularly advantageous in the context of automatic actuation. An automatic actuation apparatus system in accordance with one aspect of the invention will now be described with respect to Figures 8 to 10.

Figure 8 is a schematic view showing the pipette mounted in the actuating system 30. The actuating system 30 includes a reciprocating plate 32 which is movable between a first position, which it occupies in Figure 8, and a second lower position (not shown) in the direction of the arrow C. The reciprocating plate 32 therefore moves in a vertical plane between the first and second positions. The reciprocating plate 32 is driven against a spring bias by a motor 34 to the lower position. The plate 32 is resiliently biased to return to the upper position shown in Figure 8. The plate moves in the Y direction using the coordinate system shown in Figure 8.

The actuating system also comprises pipette receiving means 36. The pipette receiving means comprises a mounting plate 38 extending in a vertical plane parallel to the plane in which the plate 32 moves to which a plurality of pipette receiving parts in the form of resilient clips 40 are mounted at intervals in the X direction. This corresponds to the radial direction of a pipette. The mounting plate 38 is connected to a motor in such a way that it is movable in the X and Z directions.

Each of the clips 40 is arranged to receive a single pipette, and is arranged to cooperate with the mounting portion 17 of a bellows piece in accordance with the invention.

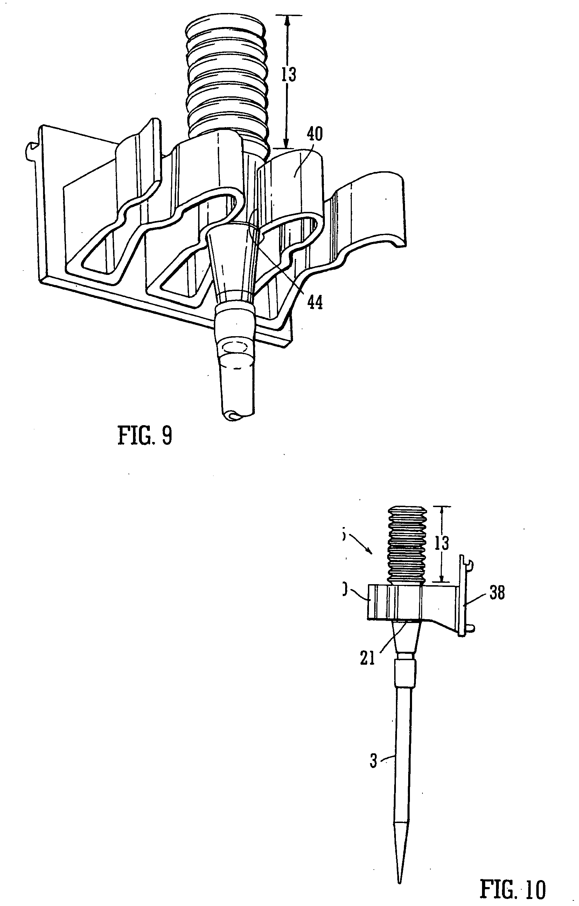

The mounting of a pipette 1 to the actuating system using the receiving means 36 is illustrated in more detail in Figures 9 and 10. The lower end 44 of the clip 40 engages against the locating groove 21 at the lower end of the mounting portion 17. When a pipette 1 is correctly mounted in the pipette receiving means, the bellows portion 13 extends above the retaining clip 40, such that its top may engages against the reciprocating plate 32 as the plate 32 is lowered from the position shown in Figure 8. In this way, reciprocation of the plate 32 may cause an axial compressive force to be applied and removed repeatedly from the bellows portion to actuate the pipette. As the plate 32 moves towards the lower portion, the bellows portion 13 is compressed, collapsing the concertina formation, while as the plate is raised once more towards the upper position, the bellows portion 13 expands once more. Actuation may therefore cause liquid to be dispensed and aspirated from the pipette in the same manner described with respect to manual actuation.

The reciprocating plate may be driven by discrete steps to result in a desired distance of travel to compress the bellows portions by a given amount to achieve delivery of a desired amount of fluid, or conversely aspiration of fluid when travel is in the opposite direction. Appropriate distances of travel may be stored for providing aspiration or delivery of given amounts of fluids, for different volumes of the pipette or its constituent pieces. The required value may then be retrieved by a control system for a given set of input conditions, and the plate moved through the required number of steps to provide a required total distance of travel. The steps may be distinct, or movement may be continuous between them.

In use, the reciprocating plate 32 is driven by the motor 34 from the raised position shown in Figure 8 to a lower position which is not shown. The plate engages the top 17 of the bellows portion 13 of a pipette 1 securely held in the clip 40. Thus, as the reciprocating plate moves relative to the pipette, and engages the top end 17 of the bellows portion, the bellows portion is compressed, allowing liquid to be delivered through the distal end of the dispensing piece 3. Conversely, when the reciprocating plate 32 moves back to its raised position shown in Figure 8, the bellows portion expands towards its original unstretched state, allowing liquid to be drawn up through the dispensing portion when its tip is submerged in liquid. Liquid may be held in any suitable container located below the dispensing piece 3 of the pipette e.g. in a well, etc. A plurality of containers corresponding to the positions of each of the pipettes may be provided e.g. in a tray or similar. Suitable sets of containers are known in the art.

Actuation of the pipette, or indeed any number of pipettes simultaneously, may be readily achieved by a simple reciprocation of the plate 32 such that it engages the ends of the bellows portions 13 of the bellows pieces 7, and compresses or decompresses the bellows portion 13 as required. This avoids the need to provide a pump, or complicated piston and cylinder arrangements as in conventional arrangements. The construction of the bellows piece is greatly simplified.

In use, the mounting plate 38 of the receiving means of the actuating means may be moved in the X or Z directions to allow movement of pipettes between sets of containers, allowing transfer of liquid as known in the art. The movement may be accomplished under the control of a workstation or a robot, for example.

It will be appreciated that mounting and removal of pipettes to or from the receiving means of the actuating means may be accomplished very simply in these embodiments in which the receiving parts in the form of clips. These operations may be achieved by movement of the receiving portion in the Z direction i.e. forward or backward into the page relative to the pipette. For example, when it is desired to demount the pipette 1 from the receiving means, the pipette may be located with its dispensing portion at least partially received in a container. This will constrain the ability of the pipette to move relative to the receiving means. As the receiving means is moved in the Z direction backwards into the page according to the view of Figure 8, the pipette will be dislodged from the clip, and left in the container. Suitable containers may be associated with a trash position. Mounting of the pipette may proceed in a similar manner, by first locating the pipette in a container, and then moving the mounting plate of the receiving means and hence the clips 40 secured thereto forward in the Z direction into engagement with the mounting portion 17 of the pipette.

It will be appreciated that the combination of the two-piece pipette construction and an automatic actuating system of the type shown in Figures 8 to 10 is particularly advantageous. It has been found that the two piece construction provides the pipette with greater structural rigidity and strength than would be the case if the bellows piece and dispensing piece were integrally formed. This allows the pipette to better withstand the action of the actuating means i.e. the compression by the reciprocating plate, reducing the likelihood that it will bend or flex on engagement with the plate in a manner which might interfere with the ability of the dispensing piece to reliably enter a container.

As only the bellows piece 5 is held within the receiving clip 40, the dispensing piece 3 is unsupported, other than by its attachment to bellows piece 5. Thus, the dispensing pieces 3 may be readily exchanged even during the course of a run of the machine. The ability to change the dispensing piece will allow a greater range of liquids and liquid volumes to be dispensed.

Furthermore, the construction of the bellows piece 5 in preferred embodiments, which enables liquid to enter the lower portion of the bellows piece may provide the ability to handle greater volumes of liquid than a conventional pipette.

It will be appreciated that provided the height of the bellows portions 13 of the bellows pieces 5 which extends above the mounting portion 17, and hence the clip 40 may be kept constant for different ones of the plurality of pipettes, such that each will be reliably engaged by the reciprocating plate at the same time as it moves downwards. However, flexibility in the capacity of the pipette, and its action is still possible by virtue of the ability to vary the diameter of the bellows piece 5. The use of receiving parts in the form of clips 40 which clamp around the bellows pieces allows bellows pieces of different diameters to be securely held.

It will be appreciated that the pipettes may be used in conjunction with fluids other than liquids in accordance with the invention, although the preferred embodiments involve the use of liquids. For example, high density gases may be used. Furthermore, while the actuating system involves a reciprocating plate, it is envisage that any arrangement of an actuator and receiving means which are reciprocable relative to one another may be used.

The volumes of the pipettes of the invention may vary over a wide range. By way of example only, the dispensing/aspirating volume may be in the range of from 0.1ml to 15000ml, or from 5ml to 3000ml.

## Claims

1. An actuating system (30) in combination with a plurality of pipettes (1) of the type comprising a dispensing portion (7) and a bellows portion (13);
the actuating system comprising: means for receiving a plurality of pipettes (36); and an actuator (32); wherein the receiving means (36) and the actuator (32) are movable in a reciprocating manner relative to one another to compress or decompress the bellows portions of pipettes received in the receiving means, **characterised in that** the receiving means (36) comprises a plurality of pipette receiving parts (38, 40) arranged to resiliently clamp around respective ones of the pipettes to mount the pipettes to the receiving means, wherein the pipette receiving parts are in the form of clips (40),
wherein each of said plurality of pipettes is a multi-piece pipette, having a bellows piece (5) comprising said bellows portion (13) and a separate dispensing piece (3) comprising said dispensing portion (7), wherein the dispensing piece and bellows piece comprise respective connecting portions (9, 11) which co-operate with one another to provide a detachable attachment between the dispensing piece and the bellows piece, whereby the bellows piece (5) and dispensing piece (3) of the pipette may be detached and re-attached to one another by a user to disassemble or assemble the pipette.

2. The combination of claim 1, wherein the connecting portions (9, 11) of the bellows piece (5) and the dispensing piece (3) are arranged to resiliently fit together.

3. The combination of any preceding claim, wherein the bellows portion comprises a bellows formation which is an axially extending concertina formation.

4. The combination of any preceding claim, wherein each pipette further comprises a mounting portion (17) for facilitating mounting of the pipette to said actuating system (30).

5. The combination of claim 4, wherein said mounting portion (17) comprises a locating groove (21) which co-operates with a receiving part of said pipette receiving means.

6. The combination of claims 4 or 5, wherein the bellows piece comprises said mounting portion for facilitating mounting of the bellows piece to said actuating system, the mounting portion being located below the bellows portion.

7. The combination of claim 6, wherein the mounting portion is untapered and wherein the bellows piece further comprises a tapered portion (19) below the mounting portion (17).

8. The combination of any preceding claim, wherein the bellows piece comprises a bellows portion comprising a bellows formation and a lower portion (17, 19) below said bellows portion which is free from said bellows formations.

9. The combination of any preceding claim, wherein the bellows piece and dispensing piece are each formed of plastic.

10. The combination of any preceding claim, wherein a bellows formation of the bellows portion is provided by folds (15, 25) in the external walls of the bellows piece.

11. The combination of any preceding claim, wherein the bellows portion is configured to be axially compressible and expandable between expanded and contracted states to cause fluid to move out of or into the bellows portion to or from the dispensing portion in use, wherein the bellows portion may be axially compressed by applying a force to a closed axial end of the bellows piece.

12. The combination of any preceding claim, wherein a first pipette of said plurality of pipettes comprises a first bellows piece and a first dispensing piece, and a second pipette of said plurality of pipettes comprises a second bellows piece and a second dispensing piece, wherein the first and second bellows pieces and/or the first and second dispensing pieces are configured such that they may be interchanged with one another to provide a pipette comprising the first bellows piece and the second dispensing piece and/or a pipette comprising the second bellows piece and the first dispensing piece.

13. A method of using the combination of any preceding claim, the method comprising mounting the plurality of pipettes in the pipette receiving means, and moving the actuator and receiving means relative to one another in a manner which results in compression and/or decompression of the bellows portions of the pipettes.

14. The method of claim 13, comprising moving the actuator and receiving means relative to one another to compress the bellows portions and thereby dispense liquid contained in dispensing portions of the pipettes, or to create an underpressure in preparation for aspiration of liquid; and/or reciprocating the receiving means and the actuator in a manner which allows the bellows portions to expand and thereby aspirate liquid into dispensing portions of the pipettes.

15. The method of claims 13 or 14, further comprising the step of moving the receiving means relative to the pipettes in a manner which results in disengagement of the pipettes from the receiving means to release the pipettes.

## Patentansprüche

1. Ein Betätigungssystem (30) in Kombination mit einer Mehrzahl von Pipetten (1) des Typs, der einen Abgabeabschnitt (7) und einen Balgabschnitt (13) aufweist;
ein Betätigungssystem, das folgende Merkmale aufweist: eine Einrichtung zum Aufnehmen einer Mehrzahl von Pipetten (36); und ein Betätigungsglied (32); wobei die Aufnahmeeinrichtung (36) und das Betätigungsglied (32) relativ zueinander hin und her bewegbar sind, um die Balgabschnitte von in der Aufnahmeeinrichtung aufgenommenen Pipetten zu komprimieren oder zu dekomprimieren, **dadurch gekennzeichnet, dass** die Aufnahmeeinrichtung (36) eine Mehrzahl von Pipettenaufnahmeteilen (38, 40) aufweist, die dazu angeordnet sind, jeweilige der Pipetten elastisch einzuspannen, um die Pipetten an der Aufnahmeeinrichtung anzubringen, wobei die Pipettenaufnahmeteile in Form von Klemmen (40) vorliegen,
wobei jede der Mehrzahl von Pipetten eine mehrstückige Pipette ist, die ein Balgstück (5) das den Balgabschnitt (13) aufweist, und ein separates Abgabestück (3), das den Abgabeabschnitt (7) aufweist, aufweist, wobei das Abgabestück und das Balgstück jeweilige Verbindungsabschnitte (9, 11) aufweisen, die miteinander zusammenwirken, um eine lösbare Befestigung zwischen dem Abgabestück und dem Balgstück bereitzustellen, wodurch das Balgstück (5) und das Abgabestück (3) der Pipette seitens eines Benutzers voneinander gelöst und wieder aneinander befestigt werden können, um die Pipette auseinanderzubauen oder zusammenzubauen.

2. Die Kombination gemäß Anspruch 1, bei der die Verbindungsabschnitte (9, 11) des Balgstücks (5) und des Abgabestücks (3) dahin gehend angeordnet ist, elastisch zusammenzupassen.

3. Die Kombination gemäß einem beliebigen vorhergehenden Anspruch, bei der der Balgabschnitt eine Balgformation aufweist, die eine sich axial ausdehnende Ziehharmonika-Formation ist.

4. Die Kombination gemäß einem beliebigen vorhergehenden Anspruch, bei der jede Pipette ferner einen Anbringabschnitt (17) zum Ermöglichen des Anbringens der Pipette an dem Betätigungssystem (30) aufweist.

5. Die Kombination gemäß Anspruch 4, bei der der Anbringabschnitt (17) eine Positionierungsrille (21) aufweist, die mit einem Aufnahmeteil der Pipettenaufnahmeeinrichtung zusammenwirkt.

6. Die Kombination gemäß Anspruch 4 oder 5, bei der das Balgstück den Anbringabschnitt zum Ermöglichen des Anbringens des Balgstücks an dem Betätigungssystem aufweist, wobei sich der Anbringabschnitt unter dem Balgabschnitt befindet.

7. Die Kombination gemäß Anspruch 6, bei der der Anbringabschnitt unverjüngt ist und bei der das Balgstück ferner einen verjüngten Abschnitt (19) unter dem Anbringabschnitt (17) aufweist.

8. Die Kombination gemäß einem beliebigen vorhergehenden Anspruch, bei der das Balgstück einen Balgabschnitt, der eine Balgformation aufweist, und einen unteren Abschnitt (17, 19) unter dem Balgabschnitt aufweist, der frei von besagten Balgformationen ist.

9. Die Kombination gemäß einem beliebigen vorhergehenden Anspruch, bei der das Balgstück und das Abgabestück jeweils aus Kunststoff gebildet sind.

10. Die Kombination gemäß einem beliebigen vorhergehenden Anspruch, bei der eine Balgformation des Balgabschnitts durch Falten (15, 25) in den Außenwänden des Balgstücks bereitgestellt wird.

11. Die Kombination gemäß einem beliebigen vorhergehenden Anspruch, bei der der Balgabschnitt dazu konfiguriert ist, zwischen einem auseinandergezogenen und einem zusammengezogenen Zustand axial komprimierbar und ausdehnbar zu sein, um zu bewirken, dass sich im Gebrauch Fluid aus dem oder in den Balgabschnitt in den oder aus dem Abgabeabschnitt bewegt, wobei der Balgabschnitt durch Ausüben einer Kraft auf ein geschlossenes axiales Ende des Balgstücks axial komprimiert werden kann.

12. Die Kombination gemäß einem beliebigen vorhergehenden Anspruch, bei der eine erste Pipette der Mehrzahl von Pipetten ein erstes Balgstück und ein erstes Abgabestück aufweist und eine zweite Pipette der Mehrzahl von Pipetten ein zweites Balgstück und ein zweites Abgabestück aufweist, wobei das erste und das zweite Balgstück und/oder das erste und das zweite Abgabestück derart konfiguriert sind, dass sie untereinander ausgetauscht werden können, um eine Pipette, die das erste Balgstück und das zweite Abgabestück aufweist, und/oder eine Pipette, die das zweite Balgstück und das erste Abgabestück aufweist, bereitzustellen.

13. Ein Verfahren zur Verwendung der Kombination gemäß einem beliebigen vorhergehenden Anspruch, wobei das Verfahren ein Anbringen der Mehrzahl von Pipetten in der Pipettenaufnahmeeinrichtung und ein Bewegen des Betätigungsglieds und der Aufnahmeeinrichtung relativ zueinander auf eine Weise aufweist, die zu einer Komprimierung und/oder Dekomprimierung der Balgabschnitte der Pipetten führt.

14. Das Verfahren gemäß Anspruch 13, das ein Bewegen des Betätigungsglieds und der Aufnahmeeinrichtung relativ zueinander, um die Balgabschnitte zu komprimieren und dadurch Flüssigkeit, die in Abgabeabschnitten der Pipetten enthalten ist, abzugeben oder um in Vorbereitung auf eine Ansaugung von Flüssigkeit einen Unterdruck zu erzeugen; und/oder ein Hin- und Herbewegen der Aufnahmeeinrichtung und des Betätigungsglieds auf eine Weise, die es den Balgabschnitten ermöglicht, sich auszudehnen und dadurch Flüssigkeit in Abgabeabschnitte der Pipetten anzusaugen, aufweist.

15. Das Verfahren gemäß Anspruch 13 oder 14, das ferner den Schritt des Bewegens der Aufnahmeeinrichtung relativ zu den Pipetten auf eine Weise aufweist, die zu einer Loslösung der Pipetten von der Aufnahmeeinrichtung führt, um die Pipetten freizugeben.

## Revendications

1. Système de commande (30) en combinaison avec une pluralité de pipettes (1) du type de celles comprenant une portion de distribution (7) et une portion à soufflet (13) ;
le système de commande comprenant : des moyens de réception d'une pluralité de pipettes (36) ; et un actionneur (32) ; les moyens de réception (36) et l'actionneur (32) étant animés d'un mouvement alternatif l'un par rapport à l'autre pour comprimer ou décomprimer les portions à soufflet des pipettes reçues dans les moyens de réception, **caractérisé en ce que** les moyens de réception (36) comprennent une pluralité de parties de réception de pipette (38, 40) agencées pour se serrer de manière élastique autour de pipettes respectives afin de monter les pipettes sur les moyens de réception, les parties de réception de pipette se présentant sous la forme de clips (40),
dans lequel chacune des pipettes de ladite pluralité de pipettes est une pipette à pièces multiples, ayant une pièce à soufflet (5) comprenant ladite portion à soufflet (13) et une pièce de distribution séparée (3) comprenant ladite portion de distribution (7), la pièce de distribution et la pièce à soufflet comprenant des portions de liaison respectives (9, 11) qui coopèrent les unes avec les autres pour créer une fixation amovible entre la pièce de distribution et la pièce à soufflet, moyennant quoi la pièce à soufflet (5) et la pièce de distribution (3) de la pipette peuvent être détachées l'une de l'autre et rattachées l'une à l'autre par un utilisateur afin de démonter ou de monter la pipette.

2. Combinaison selon la revendication 1, dans laquelle les portions de liaison (9, 11) de la pièce à soufflet (5) et de la pièce de distribution (3) sont agencées pour s'emboîter ensemble de manière élastique.

3. Combinaison selon une quelconque revendication précédente, dans laquelle la portion à soufflet comprend une formation de soufflet qui est une formation en accordéon s'étendant axialement.

4. Combinaison selon une quelconque revendication précédente, dans laquelle chaque pipette comprend en outre une portion de montage (17) pour faciliter le montage de la pipette sur ledit système de commande (30).

5. Combinaison selon la revendication 4, dans laquelle ladite portion de montage (17) comprend une rainure de positionnement (21) qui coopère avec une partie de réception desdits moyens de réception de pipette.

6. Combinaison selon la revendication 4 ou 5, dans laquelle la pièce à soufflet comprend ladite portion de montage pour faciliter le montage de la pièce à soufflet sur ledit système de commande, la portion de montage se trouvant sous la portion à soufflet.

7. Combinaison selon la revendication 6, dans laquelle la portion de montage est non conique et dans lequel la pièce à soufflet comprend en outre une portion conique (19) sous la portion de montage (17).

8. Combinaison selon une quelconque revendication précédente, dans laquelle la pièce à soufflet comprend une portion à soufflet comprenant une formation de soufflet et une portion inférieure (17, 19) sous ladite portion à soufflet qui est dépourvue desdites formations de soufflet.

9. Combinaison selon une quelconque revendication précédente, dans laquelle la pièce à soufflet et la pièce de distribution sont chacune constituées de plastique.

10. Combinaison selon une quelconque revendication précédente, dans laquelle une formation de soufflet de la portion à soufflet est créée par des plis (15, 25) dans les parois externes de la pièce à soufflet.

11. Combinaison selon une quelconque revendication précédente, dans laquelle la portion à soufflet est configurée pour être compressible et extensible axialement entre des états étendu et contracté afin d'amener un fluide à se déplacer à l'extérieur ou à l'intérieur de la portion à soufflet vers ou depuis la portion de distribution lors de l'utilisation, la portion à soufflet pouvant être axialement comprimée en appliquant une force à une extrémité axiale fermée de la pièce à soufflet.

12. Combinaison selon une quelconque revendication précédente, dans laquelle une première pipette de ladite pluralité de pipettes comprend une première pièce à soufflet et une première pièce de distribution, et une deuxième pipette de ladite pluralité de pipettes comprend une deuxième pièce à soufflet et une deuxième pièce de distribution, dans laquelle les première et deuxième pièces à soufflets et/ou les première et deuxième pièces de distribution sont configurées de telle sorte qu'elles peuvent être mutuellement interchangées pour créer une pipette comprenant la première pièce à soufflet et la deuxième pièce de distribution et/ou une pipette comprenant la deuxième pièce à soufflet et la première pièce de distribution.

13. Procédé d'utilisation de la combinaison selon une quelconque revendication précédente, le procédé comprenant le montage de la pluralité de pipettes dans les moyens de réception de pipette, et le déplacement de l'actionneur et des moyens de réception l'un par rapport à l'autre d'une manière qui entraîne la compression et/ou la décompression des portions à soufflet des pipettes.

14. Procédé selon la revendication 13, comprenant le déplacement de l'actionneur et des moyens de réception l'un par rapport à l'autre afin de comprimer les portions à soufflet et distribuer ainsi le liquide contenu dans les portions de distribution des pipettes, ou de créer une sous-pression lors de la préparation pour l'aspiration de liquide ; et/ou le déplacement alternatif des moyens de réception et de l'actionneur d'une manière qui permet aux portions à soufflet de s'étendre et d'aspirer ainsi le liquide dans les portions de distribution des pipettes.

15. Procédé selon la revendication 13 ou 14, comprenant en outre l'étape consistant à déplacer le moyen de réception par rapport aux pipettes d'une manière qui entraîne le désengagement des pipettes vis-à-vis des moyens de réception afin de libérer les pipettes.
